# EUROPEAN PATENT SPECIFICATION

(11) **EP 0 909 790 B1**
(45) Date of publication and mention of the grant of the patent: **07.01.2004**
(21) Application number: 98308249.6
(22) Date of filing: 09.10.1998
(51) Int. Cl.: C08L 69/00, C08K 5/521, C08K 5/00

(54) **Flame resistant compositions of polycarbonate and monovinylidene aromatic compounds**
Flammhemmende Zusammensetzungen aus Polycarbonat und monovinyliden-aromatische Verbindungen
Compositions ignifuges de polycarbonate et de composés monovinylidène aromatiques

(30) Priority: 16.10.1997 US 951859
(43) Date of publication of application: 21.04.1999
(73) Proprietor: GENERAL ELECTRIC COMPANY, Schenectady, NY 12345 (US)
(72) Inventor: Wroczynski, Ronald James, Schenectady, New York 12303 (US)
(74) Representative: Szary, Anne Catherine, Dr.

(56) References cited:
- EP-A- 0 308 179
- EP-A- 0 659 834
- EP-A- 0 829 517

## Description

The present invention relates to a flame resistant polymer composition useful for molding applications. The polymer composition comprises a blend of polycarbonate resin and a monovinylidene aromatic compound, a phosphate flame retardant compound, an acid scavenger, and optionally, a tetrafluoroethylene polymer. The present invention also relates to methods of flame retarding thermoplastic resin compositions and to articles molded with the composition of this invention.

### Description of the Prior Art

The prior art has disclosed the use of phosphate esters, such as triphenyl phosphate, tricresyl phosphate, diphenylcresyl phosphate, resorcinol diphosphate, and the like, as flame retardants for polymers or thermoplastic molding resins particularly. However, such phosphate esters tend to hydrolyze when subjected to conditions of high humidity and elevated temperatures resulting in the formation of various phosphoric acids. The phosphoric acids in turn degrade the polycarbonate resin resulting in loss of physical properties of the thermoplastic composition. A second adverse affect that accompanies the formation of hydrolysis decomposition products of the phosphate esters is migration of the hydrolyzed additive to the surface of molded parts. This migration is commonly referred to as "juicing." The results of juicing by the hydrolysis decomposition products include cracks on the surface of the molded part and damage to the tool used to mold the part.

Serini et al. (U.S. Patent 4,463,130) discloses a composition of an aromatic polycarbonate, a styrene containing copolymer such as acrylonitrile-butadiene-styrene (ABS), polyphosphate flame retardants, and halogen-containing compounds. Conventional additives are disclosed at column 13, beginning at line 28; however, hydrolysis decomposition products of phosphate esters and the problems associated with these decomposition products are not disclosed; and acid scavengers for the hydrolysis decomposition products of the phosphate esters are not disclosed.

Kress et al. (U.S. Patent 4,692,488) discloses a composition of an aromatic polycarbonate, a styrene containing copolymer such as acrylonitrile-butadiene-styrene (ABS), and monomeric phosphate flame retardants. Conventional additives are disclosed at column 6, beginning at line 32; however, hydrolysis decomposition products of the phosphate esters and the problems associated with these decomposition products are not disclosed; and acid scavengers for the hydrolysis decomposition products of the phosphate esters are not disclosed.

Ogoe et al. (U.S. Patent 4,927,870) discloses a composition of an aromatic polycarbonate, a styrene containing copolymer such as acrylonitrile-butadiene-styrene (ABS), monomeric phosphate flame retardants, and a metal salt of an inorganic acid to improve the flame resistance of the composition. Various additives are disclosed at column 5, beginning at line 19; however, hydrolysis decomposition products of the phosphate esters and the problems associated with these decomposition products are not disclosed; and acid scavengers for the hydrolysis decomposition products of the phosphate esters are not disclosed.

Fuhr et al. (U.S. Patent 4,988,748) discloses a composition of an aromatic polycarbonate, a styrene containing copolymer such as acrylonitrile-butadiene-styrene (ABS), phosphate flame retardants, and polytetrafluoroethylene. Conventional additives are disclosed at column 8, beginning at line 44; however, hydrolysis decomposition products of the phosphate esters and the problems associated with these decomposition products are not disclosed; and acid scavengers for the hydrolysis decomposition products of the phosphate esters are not disclosed.

Wittmann et al. (U.S. Patent 5,061,745) discloses a composition of an aromatic polycarbonate, a styrene containing copolymer such as acrylonitrile-butadiene-styrene (ABS), and monomeric phosphate flame retardants. Conventional additives are disclosed at column 9, beginning at line 11; however, hydrolysis decomposition products of the phosphate esters and the problems associated with these decomposition products are not disclosed; and acid scavengers for the hydrolysis decomposition products of the phosphate esters are not disclosed.

Jalbert et al. (U.S. Patent 5,026,777) discloses a matte or low gloss composition of an aromatic polycarbonate, an emulsion grafted ABS polymer, and a low gloss enhancing amount of a poly(epoxy). Conventional additives are disclosed at column 5, beginning at line 45; however, phosphates are only broadly disclosed and hydrolysis decomposition products of the phosphate esters and the problems associated with these decomposition products are not taught or suggested.

Gosens et al. (U.S. Patent 5,204,394) discloses a composition of an aromatic polycarbonate, a styrene containing copolymer such as acrylonitrile-butadiene-styrene (ABS), and oligomeric phosphate flame retardants. Conventional additives are disclosed at column 5, beginning at line 46; however, hydrolysis decomposition products of the phosphate esters and the problems associated with these decomposition products are not disclosed; and acid scavengers for the hydrolysis decomposition products of the phosphate esters are not disclosed.

Fuhr et al. (U.S. Patent 5,272,193) discloses a composition of an aromatic polycarbonate, a styrene containing copolymer such as acrylonitrile-butadiene-styrene (ABS), and phosphate flame retardants. Conventional additives are disclosed at column 12, beginning at line 54; however, hydrolysis decomposition products of the phosphate esters and the problems associated with these decomposition products are not disclosed; and acid scavengers for the hydrolysis decomposition products of the phosphate esters are not disclosed.

For successful commercial applications in areas such as portable computers, office and business equipment, laser and inkjet printers, the thermoplastic resin needs to maintain good impact properties, good flow properties and have a high heat deflection temperature (HDT) even after repeated exposure to high humidity and elevated temperatures.

Therefore, one object of the present invention is to provide a thermoplastic molding composition having good flame retardant properties that maintains a good overall balance of properties under adverse conditions of high humidity and elevated temperatures.

A further object of the present invention is to provide a flame resistant composition having good heat deflection temperature and good impact resistance.

Another object of the present invention is to provide a flame resistant molded thermoplastic article prepared from the composition of this invention which does not experience juicing and/or edge cracking of the molded part.

These and other objects of this invention will become apparent from the following description of this invention.

### SUMMARY OF THE INVENTION

This invention is directed to a thermoplastic resin molding composition having excellent flame retardant properties while maintaining good mechanical properties such as heat deflection temperature, impact resistance and flow under conditions of high humidity and elevated temperature. Specifically the thermoplastic resin composition is a blend of polycarbonate resin and a monovinylidene aromatic compound, at least one phosphate flame retardant, and an acid scavenger containing at least one moiety selected from the group consisting of oxazoline and ortho ester.

### DETAILED DESCRIPTION OF THE INVENTION

As stated previously, the invention is directed to a flame resistant thermoplastic molding composition and to articles molded therefrom. The flame resistant thermoplastic molding composition comprises a blend of polycarbonate resin and a monovinylidene aromatic compound, at least one phosphate flame retardant additive, and an acid scavenger, optionally with a tetrafluoroethylene polymer. The phosphate employed herein is preferably represented by the following formula (I): 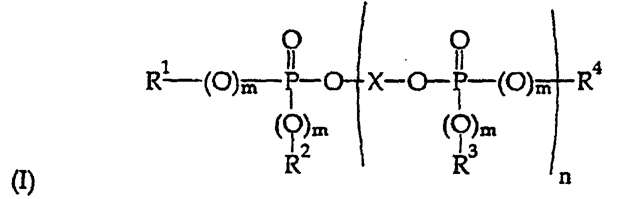 wherein R¹, R², R³ and R⁴ are each independently selected from the group consisting of an aryl or an alkaryl group, X is an arylene group, each m is independently 0 or 1. The phosphate may be a low molecular weight phosphate such as a monophosphate wherein n is 0 and as such will typically have a molecular weight less than about 500. The phosphate may also contain an oligomeric phosphate wherein n has an average value of from 0 to 5 in which case the molecular weight of the phosphate is at least about 500 and preferable about 500 to about 2000. The phosphate may also be a higher molecular weight phosphate such as a polymeric phosphate wherein n has an average value of from 6 to 35 or more, in which case the molecular weight is at least about 2000 and preferable about 2300 to about 11,000. Alternatively, the phosphate can be a mixture of any of the phosphates listed above. Mixtures of monophosphates with higher molecular weights phosphates are especially useful for balancing physical properties such as melt viscosity and heat deflection temperature of the thermoplastic compositions.

In the above formula (I) for the phosphates of the invention, the aryl groups may be aryl or an alkyl substituted aryl group (i.e. alkaryl group). Preferably, the aryl groups are independently selected from cresyl, phenyl, xylyl, propylphenyl and butylphenyl groups. The arylene group is derived from a dihydric compound and is preferably resorcinol, hydroquinone or bisphenol-A. The aryl groups (R¹, R², R³ and R⁴) are preferably phenyl. In the case of the low molecular weight phosphates, the more preferred low molecular weight phosphate is resorcinol tetraphenyl diphosphate wherein n is 1, m is 1, X is resorcinol and each of the R groups is phenyl. Also preferred are mixtures of triphenylphosphate with the aforementioned resorcinol tetraphenyl diphosphate.

The amount of phosphate employed can be that amount of phosphate that renders the resin composition flame retardant while maintaining good properties of heat deflection temperature, impact resistance, and flow while preferably avoiding edge cracking of the molded thermoplastic composition. Preferably the composition of the invention contains less than about 20 weight percent of the phosphate flame retardant based on the total weight of thermoplastic resin and phosphate flame retardant. A more preferred range is less than about 15 weight percent thereof on the total weight of thermoplastic resin and phosphate flame retardant. The most preferred range is between about 7 and about 12 weight percent based on the total weight of thermoplastic resin and phosphate flame retardant.

The acid scavenger employed in the present compositions includes those compounds that are capable of neutralizing or reacting with the hydrolysis decomposition products of the phosphate compounds previously described. Hydrolysis of the phosphate compounds is believed to lead to various acidic compounds that are capable of degrading the polycarbonate resin resulting in loss of various desirable physical properties in the compositions. An example of an illustrative reaction pathway demonstrating the hydrolysis of the phophate of formula (I) is shown below:

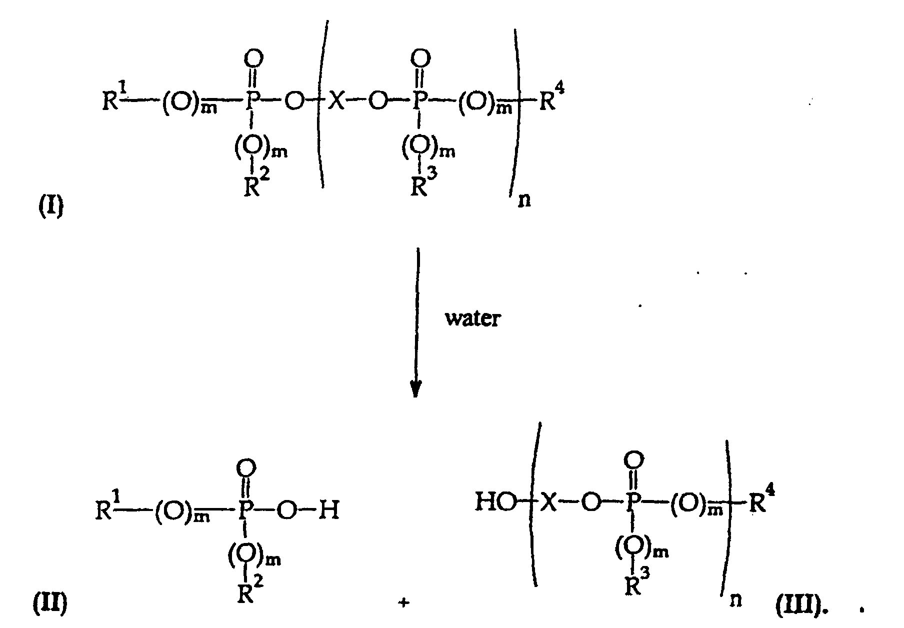

The acid scavenger meets the following criteria: (a) capable of neutralizing or reacting with the hydrolysis products of the phosphate; (b) does not itself lead to diminished physical properties of the composition; and (c) does not produce any by-product or reaction product with itself, the phosphate, or any hydrolysis product of the phosphate that results in diminished physical properties of the composition.

The acid scavengers include compounds containing, ortho ester, oxazoline, or various mixtures of ortho ester, and oxazoline. These moieties can be part of relatively small molecules (e.g., molecules having molecular weights less than about 1000) or may be part of a polymer (e.g., a polyolefin containing epoxy groups). The acid scavenger is preferably a compound which is miscible or soluble in the polycarbonate phase of the composition so as to facilitate the interactions between the acid scavenger and the hydrolysis products of the phosphate before significant degradation of the polycarbonate can occur.

The preferred acid scavengers preferably contain at least two or more of the aforementioned moieties per molecule. When the acid scavenger contains at least two of the reactive moieties per molecule, it is believed that the acid scavenger can also function to couple chains of polycarbonate together. Thus, in this manner the acid scavenger also helps to mend or rebuild the molecular weight of the polycarbonate which in turn helps to maintain or increase the ductility of the composition.

The amount of the acid scavenger utilized in the present invention depends in large part on the exact structure of the scavenger itself. When the acid scavenger is of fairly low molecular weight (e.g. less than about 1000) and has multiple moieties per compound, the amount of acid scavenger needed to achieve a desirable level of hydrolytic stability will be relatively low (e.g. less than about 1 part by weight based on the total weight of the resin composition).' On the other hand, when the acid scavenger is a polymer (e.g. polystyrene or polyethylene) and has relatively few reactive moieties per polymer chain (e.g. less than 2 on average), the amount of acid scavenger will be higher to achieve the same degree of hydrolytic stability (generally between about 1 and 5 parts by weight based on the total weight of the resin composition). A determination of the exact amount of acid scavenger is within the ordinary skill of the general experimentalist and can be determined without undue experimentation.

In the practice of the invention, the thermoplastic resin employed herein is a blend of aromatic polycarbonate resin and at least one graft copolymer resin. The polycarbonate materials are well known in the art and are usually prepared by interfacial or melt polymerization and typically comprise structural units of the formula (IV): 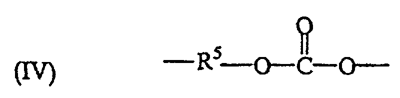 wherein R⁵ is a divalent organic radical.

Preferably, at least about 60% and more preferably at least about 80% of the total number of R⁵ values, and most desirably all of said R₅ values, are aromatic. The aromatic R⁵ radicals preferable have the formula (V):

(V) -A¹-Y-A²-

wherein each of A¹ and A² is a monocyclic divalent aromatic radical and Y is a bridging radical in which one or two atoms separate A¹ and A². The free valence bonds in formula (V) are usually in the meta or para positions of A¹ and A² in relation to Y.

In formula (V), the A¹ and A² values may be unsubstituted phenylene or substituted derivatives thereof, illustrative substituents (one or more) being alkyl, alkenyl, halo (especially chloro and/or bromo), nitro, alkoxy and the like. Unsubstituted phenylene radicals are preferred. Both A¹ and A² are preferably p-phenylene, although both may be o-phenylene or m-phenylene, or one o-phenylene or m-phenylene and the other p-phenylene.

The bridging radical, Y, is one in which one or two atoms, preferable one, separate A¹ from A². It is most often a hydrocarbon radical and particularly a saturated radical such as methylene, cyclohexylmethylene, 2-[2.2.1]-bicycloheptylmethylene, ethylene, isopropylidene, neopentylidene, cyclohexylidene, cyclopentadecylidene, cyclododecylidene or adamantylidene, especially a gem-alkylene (alkylidene) radical. Also included, however, are unsaturated radicals and radicals which contain atoms other than carbon and hydrogen; for example, 2,2-dichloroethylidene, carbonyl, phthalidylidene, oxy, thio, sulfoxy and sulfone. For reasons of availability and particular suitability for the purposes of this invention, the preferred radical of formula (V) is the 2,2-bis(4-phenylene)propane radical, which is derived from bisphenol A and in which Y is isopropylidene and A¹ and A² are each p-phenylene.

The weight average molecular weight of the polycarbonate material is well known to those skilled in the art but is preferably relatively low for purposes of this invention. However, compositions in which the polycarbonate has a higher molecular weight often have favorable ductility at the expense of decreased flow. The exact molecular weight utilized will depend, in part, on the end-use requirements of the desired application and the degree of molding difficulty encountered in forming the part.

In most instances, the polycarbonate material generally consists of a homo-polycarbonate or even a copolycarbonate, such as a copoly(ester carbonate).

Another ingredient of the present invention is the graft copolymer resin. The graft copolymer resin is preferably a graft copolymer resin comprising a rubbery polymeric substrate and a rigid polymeric superstrate. In a preferred embodiment, the graft copolymer comprises more than 30% by weight rubbery polymeric substrate to rigid polymeric superstrate. The graft copolymer resin may also be used in combination with various block copolymer resins, such as, for example, polystyrene-polybutadiene diblock, triblock, or larger multi-block copolymer resins, polystyrene-poly(ethylenebutylene) diblock, triblock, or larger multi-block copolymer resins, and polystyrene-poly(ethylene-propylene) diblock, triblock, or larger multi-block copolymer resins, as well as mixtures of block copolymer resins.

The rubbery polymeric substrate generally comprises repeating units derived from one or more ethylenically unsaturated monomers selected from conjugated diene monomers, non-conjugated diene monomers, (C₂-C₈)olefin monomers, (C₁-C₁₂)alkyl acrylate monomers, ethylenically unsaturated nitrile monomers, and vinyl aromatic monomers. Useful ratios of the aforementioned monomers as well as other useful monomers and rubbery polymeric substrates will be apparent to those skilled in the art.

Suitable conjugated diene monomers include, for example, 1,3-butadiene, isoprene, 1,3-heptadiene, methyl-1,3-pentadiene, 2,3-dimethylbutadiene, 2-ethyl-1,3-pentadiene, 1,3-hexadiene, 2, 4-hexadiene, dichlorobutadiene, bromobutadiene, and dibromobutadiene as well as mixtures of diene monomers. In preferred embodiments, the conjugated diene monomer is 1,3-butadiene or mixtures of 1,3-butadiene with styrene monomer. Suitable non-conjugated diene monomers include, for example, ethylidene norbornene, dicyclopentadiene, hexadiene, and phenyl norbornene. Those skilled in the art can readily select other useful conjugated and non-conjugated diene monomers.

Useful C₂-C₈olefin monomers include compounds having from 2 to about 8 carbon atoms per molecule and having a single site of ethylenic unsaturation per molecule. Suitable (C₂-C₈)olefin monomers include, for example, ethylene, propene, 1-butene, 1-pentene, heptene. Useful (C₁-C₁₂)alkyl acrylate monomers include acrylates having straight or branched alkyl substituent groups. The alkyl substituent groups generally have from 1 to about 12 carbon atoms per alkyl group and include, for example, methyl, ethyl, n-butyl, sec-butyl, t-butyl, n-propyl, iso-propyl, pentyl, hexyl, heptyl, octyl, nonyl, decyl, undecyl, and dodecyl. Illustrative examples of suitable (C₁-C₁₂)alkyl acrylates include butyl acrylate, iso-pentyl acrylate, n-hexyl acrylate, and 2-ethyl hexyl acrylate as well as mixtures of any of the foregoing and mixtures of any of the foregoing with other acrylates such as, for example, ethyl acrylate and methyl acrylate. The ethylenically unsaturated nitrile monomer includes acyclic compounds having a single nitrile group and a single site of ethylenic unsaturation per molecule and includes, for example, acrylonitrile and methacrylonitrile. Those skilled in the art can readily select other suitable (C₂-C₈)olefin, (C₁-C₁₂)alkyl acrylate, and ethylenically unsaturated nitrile monomers, as well as useful ratios of monomers.

Suitable vinyl aromatic monomers include, for example, styrene and substituted styrenes having one or more alkyl, alkoxyl, hydroxyl, or halo substituent groups attached to the aromatic ring, including, for example, α-methyl styrene, p-methyl styrene, vinyl toluene, vinyl xylene, trimethyl styrene, butyl styrene, chlorostyrene, dichlorostyrene, bromostyrene, p-hydroxystyrene, methoxystyrene, and vinyl-substituted condensed aromatic ring structures, such as, for example, vinyl napthalene, vinyl anthracene; as well as mixtures of vinyl aromatic monomers. In a preferred embodiment, the vinyl aromatic monomer, when one is used, is styrene, α-methyl styrene, or mixtures of styrene and α-methyl styrene.

The rubbery polymeric substrate may, optionally, include a minor amount, for example, up to 5% by weight based on the weight of the monomers used for the rubbery substrate, of repeating units derived from a polyethylenically unsaturated crosslinking monomer, for example, butylene diacrylate, divinyl benzene, butene diol dimethacrylate, trimethylolpropane tri(meth)acrylate, allyl methacrylate, diallyl maleate, and triallyl cyanurate. Those skilled in the art will be able to select an appropriate polyethylenically unsaturated crosslinking monomer, when one is desired, as well as an appropriate amount of the monomer without undue experimentation.

In a first preferred embodiment, the substrate comprises repeating units derived from one or more conjugated diene monomers, such as, for example, a substantially homopolymeric polybutadiene rubber. In a second preferred embodiment, the substrate comprises repeating units derived from one or more conjugated diene monomers and one or more copolymerizable comonomers selected from vinyl aromatic monomers and ethylenically unsaturated nitrile monomers, such as, for example, styrene-butadiene copolymers, acrylonitrile-butadiene copolymers and styrene-butadiene-acrylonitrile copolymers. In a third preferred embodiment, the substrate comprises repeating units derived from one or more (C₁-C₁₂)alkyl acrylate monomers, more preferably from one or more monomers selected from butyl acrylate and n-hexyl acrylate including mixtures of one or both of the foregoing with other acrylates such as, for example, ethyl acrylate. In a fourth preferred embodiment, the substrate comprises units derived from one or more olefin monomers and includes, for example, ethylene/propylene copolymers, ethylene/propylene/non-conjugated diene monomer terpolymers.

Suitable rubbery polymeric substrates are made by known processes, for example, emulsion polymerization and mass polymerization. Generally, the rubbery polymeric substrate is made by aqueous emulsion polymerization in the presence of a free radical initiator, for example, an organic peroxide or persulfate initiator or a redox initiator system, and, optionally, in the presence of a chain transfer agent, for example, an alkyl mercaptan. The rubbery polymeric substrate may exhibit a unimodal particle size distribution or a multimodal distribution, such as a bimodal distribution.

The graft copolymer resin, in addition to comprising a rubbery polymeric substrate, also contains a rigid polymeric superstrate. The rigid polymeric superstrate includes repeating units derived monomers selected from the group consisting of (C₁-C₁₂)alkyl acrylate monomers, vinyl aromatic monomers and ethylenically unsaturated nitrile monomers. One skilled in the art can select an appropriate monomer or combination of monomers to afford a suitable rigid polymeric substrate. Suitable vinyl aromatic monomers and ethylenically unsaturated nitrile monomers are set forth above. As used herein the terminology alkyl acrylate monomers refers collectively to acrylate monomers and methacrylate monomers. Suitable alkyl acrylate monomers include the acrylate monomers disclosed above and their methacrylate analogs such as, for example, methyl methacrylate, ethyl methacrylate, propyl methacrylate, iso-propyl methacrylate, butyl methacrylate, hexyl methacrylate, decyl methacrylate, and the like.

In a preferred embodiment, the rigid polymeric superstrate comprises repeating units derived from one or more monomers selected from styrene, ∝ - methyl styrene, and acrylonitrile. In a more preferred embodiment, the superstrate comprises from about 60% to about 90% by weight repeating units derived from styrene and from about 10% to about 40% by weight repeating units derived from acrylonitrile.

In an alternative preferred embodiment, the rigid polymeric superstrate comprises repeating units derived from one or more (C₁-C₁₂)alkyl acrylate monomers, and may, optionally, further comprise repeating units derived from one or more monomers selected from vinyl aromatic monomers and ethylenically unsaturated nitrile monomers. In another preferred embodiment, the rigid polymeric superstrate comprises greater than or equal to 50% by weight repeating units derived from one or more (C₁-C₁₂)alkyl acrylate monomers, more preferably from one or more monomers selected from methyl methacrylate, ethyl methacrylate, propyl methacrylate, isopropyl methacrylate and butyl methacrylate.

The rubbery substrate and the rigid superstrate may each independently optionally include minor amounts, for example, up to about 15% by weight of the total weight of the respective substrate or superstrate, of repeating units derived from one or more other copolymerizable ethylenically unsaturated monomers. Illustrative examples of suitable copolymerizable unsaturated monomers include ethylenically unsaturated carboxylic acids such as, for example, acrylic acid, methacrylic acid, itaconic acid; hydroxy(C₁-C₁₂)alkyl acrylate monomers such as, for example, hydroxyethyl methacrylate; (C₄-C₁₂)cycloalkyl acrylate monomers such as for example, cyclohexyl methacrylate; (meth)acrylamide monomers such as, for example, acrylamide and methacrylamide; vinyl esters such as, for example, vinyl acetate and vinyl propionate. The (C₄-C₁₂)cycloalkyl moiety above includes cyclic alkyl substituent groups having from about 4 to about 12 carbon atoms per group and the term (meth)acrylamide refers collectively to acrylamides and methacrylamides. Those skilled in the art can readily select other suitable copolymerizable ethylenically unsaturated monomers based, in part, on specific requirements for a particular composition.

The rigid polymeric superstrate may, optionally, include a minor amount, for example, up to about 3% by weight, more preferably up to about 1.5% by weight, of repeating units derived from one or more polyethylenically crosslinking monomers. Suitable crosslinking monomers are disclosed above.

The graft copolymer resin is made according to known processes by polymerizing one or more monomers selected to provide a rigid polymeric superstrate in the presence of particles of the rubbery polymeric substrate under conditions such that at least a portion of the rigid polymeric superstrate is chemically grafted to the rubbery polymeric substrate by covalent bonds. In a preferred embodiment, the superstrate monomers are polymerized by an aqueous emulsion or aqueous suspension polymerization reaction in the presence of substrate particles and a polymerization initiator system, for example, a thermal or redox initiator system wherein a portion of the polymerizing chains of the superstrate monomers are chemically bonded or grafted to the substrate via reaction with unsaturated sites in the substrate. The unsaturated sites in the substrate are provided, for example, by residual unsaturated sites in repeating units derived from a conjugated diene or by residual unsaturated sites in repeating units derived from a graft linking monomer. In a preferred embodiment, the graft copolymer resin is a high rubber graft copolymer resin. By the term high rubber graft is meant that greater than about 30% by weight, preferably greater than about 45% by weight of the rigid polymeric superstrate is chemically grafted to the rubbery polymeric substrate.

In a first preferred embodiment, the substrate comprises repeating units derived from one or more conjugated diene monomers, and may, optionally, further comprise repeating units derived from one or more monomers selected from vinyl aromatic monomers and ethylenically unsaturated nitrile monomers, and the superstrate comprises repeating units derived from one or more monomers selected from butadiene, vinyl aromatic monomers and ethylenically unsaturated nitrile monomers. The preferred graft copolymer resins include, for example, acrylonitrile-butadiene-styrene resins commonly referred to as "ABS" resins.

Especially preferred are acrylonitrile-butadiene-styrene copolymers having greater than 30% by weight rubbery polymeric substrate, preferably greater than about 45% by weight rubbery polymeric substrate. The most preferred rubbery substrates comprise polybutadiene or styrene-butadiene copolymer. Also preferred are high rubber graft acrylonitrile-butadiene-styrene copolymers. The phrase "high rubber graft" refers generally to graft copolymer resins wherein at least about 30% by weight, preferably at least about 45% by weight of the rigid polymeric phase is chemically bound or grafted to the rubbery polymeric phase. Suitable ABS-type high rubber graft copolymers are commercially available from, for example, GE Specialty Chemicals, Inc. under the trademark BLENDEX and include grades 131, 336, 338, 360, and 415.

In another preferred embodiment, the rubbery polymeric substrate comprises repeating units derived from one or more (C₁-C₁₂)alkyl acrylates and the superstrate comprises repeating units derived from one or more monomers selected from vinyl aromatic monomers and ethylenically unsaturated nitrile monomers, and include, for example, styrene-acrylate ("SA") high rubber graft copolymers and acrylonitrile-styrene-acrylate ("ASA") high rubber graft copolymers. Suitable ASA-type graft copolymers are commercially available from, for example, GE Specialty Chemicals, Inc. under the trademark BLENDEX and include grade 975, 977, and 980.

In a third preferred embodiment, the substrate comprises repeating units derived from one or more conjugated diene monomers and may, optionally, further comprise repeating units derived from one or more monomers selected from (C₁-C₁₂)alkyl acrylate monomers, vinyl aromatic monomers and ethylenically unsaturated nitrile monomers, and the superstrate comprises repeating units derived from one or more (C₁-C₁₂)alkyl acrylate monomers and may, optionally, further comprise repeating units derived from one or more monomers selected from vinyl aromatic monomers and ethylenically unsaturated nitrile monomers, such as, for example, methyl methacrylate-acrylonitrile-butadiene-styrene ("MABS") high rubber graft copolymers, methacrylate-butadiene-styrene ("MBS") high rubber graft copolymers. Suitable MBS-type graft copolymers are commercially available from Rohm and Haas Company under the trademark PARALOID and include grades BTA-733 and BTA-753 and from Kaneka Texas under the trademark KANE ACE and include grade B-56.

In another preferred embodiment, the superstrate comprises repeating units derived from one or more olefin monomers and may, optionally, further comprise repeating units derived from one or more non-conjugated diene monomers, and the superstrate comprises repeating units derived from one or more monomer selected from vinyl aromatic monomers and ethylenically unsaturated nitrile monomers, and include, for example, acrylonitrile-ethylene-propylene-styrene ("AES") high rubber graft copolymers.

In another preferred embodiment, the substrate comprises repeating units derived from one or more (C₁-C₁₂)alkyl acrylate monomer and the superstrate comprises repeating units derived from one or more (C₁-C₁₂)alkyl (meth)acrylate monomer, and include, for example, acrylic core-shell graft copolymers. Also included with the acrylic core-shell graft copolymers are butadiene modified acrylic copolymers. Suitable acrylic-type graft copolymers are commercially available from Rohm and Haas Company under the trademark PARALOID and include grades KM 334 and KM 355 and from Elf Atochem as grade Dura-strength 200.

The amount of graft copolymer resin in the present invention can vary widely depending on, for example, the viscosity and ductility desired, the chemical make-up of the graft copolymer resin, as well as the amount, type, and molecular weight of the polycarbonate resin employed. One of ordinary skill in the art can readily adjust the amounts of the ingredients without undue experimentation. Generally, the amount of graft copolymer resin to polycarbonate resin is in the range of about 2 percent by weight to about 85 percent by weight, preferably between about 3 percent by weight to about 30 percent by weight, based on the weight of the graft copolymer resin and polycarbonate resin combined.

The compositions of the present invention may optionally contain at least one thermoplastic polyester resin. Polyesters suitable for use in the present compositions are well known and include those comprising structural units of the formula (VI): 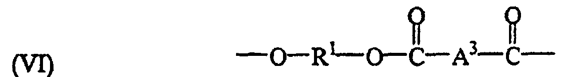 wherein each R¹ is independently a divalent aliphatic, alicyclic or aromatic hydrocarbon or polyoxyalkylene radical, or mixtures thereof and each A³ is independently a divalent aliphatic, alicyclic or aromatic radical, or mixtures thereof. Examples of suitable polyesters containing the structure of formula (VI) are poly(alkylene dicarboxylates), elastomeric polyesters, liquid crystalline polyesters, polyarylates, and polyester copolymers such as copolyestercarbonates and polyesteramides. Also included are polyesters that have been treated with relatively low levels of diepoxy or multi-epoxy compounds. It is also possible to use a branched polyester in which a branching agent, for example, a glycol having three or more hydroxyl groups or a trifunctional or multifunctional carboxylic acid has been incorporated. Treatment of the polyester with a trifunctional or multifunctional epoxy compound, for example, triglycidyl isocyanurate can also be used to make a branched polyester. Furthermore, it is sometimes desirable to have various concentrations of acid and hydroxyl endgroups on the polyester, depending on the ultimate end-use of the composition.

The R¹ radical may be, for example, a C₂₋₁₀ alkylene radical, a C₆₋₁₀ alicyclic radical, a C₆₋₂₀ aromatic radical or a polyoxyalkylene radical in which the alkylene groups contain about 2-6 and most often 2 or 4 carbon atoms. The A³ radical in the above formula (VI) is most often p- or m-phenylene or a mixture thereof. This class of polyesters includes the poly(alkylene terephthalates), the poly(alkylene naphthalates) and the polyarylates.

The poly(alkylene terephthalates), for example, poly(ethylene terephthalate) (commonly abbreviated as "PET"), poly(cyclohexyldimethanol terephthalate) (commonly abbreviated as "PCT"), and poly(butylene terephthalate) (commonly abbreviated as "PBT") are examples of suitable polyesters for the present invention. Additional suitable polyesters include poly(alkylene naphthalate)s such as, for example, poly(alkylene-2,6-naphthalate)s including poly(butylene-2,6-naphthalate) (commonly abbreviated "PBN") and poly(ethylene-2,6-naphthalate) (commonly abbreviated "PEN"). Liquid crystalline polyesters having melting points less that about 380°C and comprising recurring units derived from aromatic diols, aliphatic or aromatic dicarboxylic acids, and aromatic hydroxy carboxylic acids are also useful. Examples of useful liquid crystalline polyesters include those described in U.S. Patents 4,664,972 and 5,110,896, which are incorporated herein by reference. Various mixtures of polyesters are also sometimes very suitable.

The range of thermoplastic polyester resin can vary widely depending, at least in part, on the end-use properties desired for the composition. When a polyester resin is utilized, it is commonly present in a range of about 5 to about 90 percent by weight, preferably between about 10 to about 80 percent by weight, and most preferably between about 30 to 70 percent by weight, wherein all weights are based upon the total weight of the composition. Determination of an exact amount can be readily determined without undue experimentation.

The compositions of the invention optionally contain a tetrafluoroethylene polymer. Suitable tetrafluoroethylene polymers for use in this invention typically have a fibril structure which tends to stabilize the polymer under molten conditions. The tetrafluoroethylene polymers are commercially available or can be prepared by conventional means. They are normally solids which are obtained, for example, by polymerizing tetrafluorethylene in aqueous media in the presence of a free radical catalyst at a pressure of from about 100 to about 1,000 psi and at a temperature of from about 0°C to about 200°C. The tetrafluoroethylene polymers can be added to the thermoplastic resin composition in any manner known to the skilled artisan including addition as a direct solid, addition as a concentrate with a resin such as polycarbonate or SAN, or addition as aqueous tetrafluoroethylene polymer. Tetrafluoroethylene polymers are also referred to as PTFE and are generally disclosed in U.S. Pat. Nos. 3,005,795, 3,671,487 and 4,463,130 which are each incorporated herein by reference.

The amount of tetrafluoroethylene polymer usually ranges from about 0.01 to about 3 percent by weight, and more preferably from about 0.1 to about 0.5 percent by weight based on the entire composition.

Compositions of the present invention can also include effective amounts of at least one additive selected from the group consisting of antioxidants, ultraviolet absorbers and ultraviolet stabilizers, flame retardants, drip retardants, crystallization nucleators, dyes, pigments, colorants, reinforcing agents, fillers, stabilizers, antistatic agents, plasticizers, processing aids, and lubricants. These additives are known in the art, as are their effective levels and methods of incorporation. Effective amounts of the additives vary widely, but they are usually present in an amount up to about 50% or more by weight, based on the weight of the entire composition.

All patents cited by reference are incorporated herein by reference.

In order that those skilled in the art will be better able to practice the invention, the following examples are given by way of illustration and not by way of limitation.

### Examples

The following examples and processing conditions are illustrative of the embodiments of the present invention. All blends in the following examples were prepared on a twin screw extruder at approximately 285°C melt temperature. ASTM parts were all injection molded at approximately 250°C melt temperature. Molded test specimens of the compositions were subjected to aging at 63°C at 100% relative humidity for six weeks. At the end of the test period the polycarbonate index (hereinafter "PCI") calculated as the ratio of the hydroxyl endgroups to the carbonyl number from the carbonate units in the polycarbonate as determined by FT-IR was measured. The higher the PCI, the greater the amount of degradation of the polycarbonate. High PCI numbers are indicate of undesirable physical properties.

The materials employed in this Example as components parts (measured in parts by weight) were as follows:
- PC: an aromatic polycarbonate derived from bisphenol-A and a carbonyl chloride (phosgene) having a weight average molecular weight (Mw) of about 22,000.
- HRG: a high rubber graft copolymer prepared by grafting a styrene-acrylonitrile onto a butadiene rubber in a 50/50 weight ratio.
- SAN: styrene-acrylonitrile copolymer (acrylonitrile to styrene ratio of 25:75, weight to weight), with a weight average molecular weight (Mw) of about 97,000.
- RDP: a mixture of several aromatic oligomeric diphosphates based on resorcinol available from Akzo Chemicals under the trademark FYROFLEX RDP.
- ANOX: hindered phenol antioxidant available from Great Lakes under the trademark ANOX PP 18.
- ALKANOX: phosphite antioxidant available from Great Lakes under the trademark ALKANOX 240.
- PETS: pentaerythritol tetrastearate available from Lonza under the trademark GLYCOLUBE P.
- PTFE: polytetraflouroethylene available from DuPont in a polycarbonate concentrate (PTFE conc.) at a 20% by weight loading of polytetraflouroethylene.
- EPOXY-1: a diepoxy available from Union Carbide as grade ERL 4221.
- EPOXY-2: an epoxy modified rubbery terpolymer containing ethylene, acrylate ester, and glycidyl methacrylate obtained from Elf Atochem under the tradename LOTADER as grade 8840.
- EPOXY-3: an epoxy-modified phenol-formaldehyde resin obtained from Ciba Geigy under the tradename ARALDITE as grade ECN9495.
- TEOB: tetraethyl orthobenzoate made by methods known in the art.
- RPS: polystyrene resin containing approximately 1% oxazoline groups obtained from Dow Chemical under the tradename RPS.
- SALT-1: NaH₂PO₄
- SALT-2: ZnO

The compositions in the examples were base on the following composition.

| | | | | | | | |
|---|---|---|---|---|---|---|---|
| PC | HRG | SAN | RDP | ANOX | ALKANOX | PETS | PTFE |
| 79.75 | 6.5 | 4 | 8 | 0.15 | 0.1 | 0.5 | 1 |

The compositions in Table 1 illustrate the PCI change in the standard composition for compositions containing various additives.

**Table 1.**

| sample | acid scavenger | PCI T = 0 | PCI T = 6 weeks | % increase in PCI |
|---|---|---|---|---|
| 1* | none | 0.2949 | 0.454 | 53.95 |
| 2* | 0.1 EPOXY-1 | 0.3028 | 0.345 | 13.94 |
| 3* | 0.5 EPOXY-2 | 0.2885 | 0.397 | 37.61 |
| 4 | 1 RPS | 0.2797 | 0.401 | 43.37 |
| 5 | 3 RPS | 0.2773 | 0.401 | 58.67 |
| 6* | 0.1 SALT-1 | 0.2753 | 0.461 | 67.45 |
| 7* | 0.5 SALT-2 | 0.2897 | 0.497 | 71.56 |
| 8* | 0.2 SALT-2 | 0.3255 | 0.503 | 54.53 |
| 9* | 0.1 EPOXY-3 | 0.35 | 0.5 | 31.4 |
| 10* | 0.5 EPOXY-3 | 0.36 | 0.45 | 25.0 |
| 11* | 0.1 EPOXY-1 | 0.36 | 0.45 | 25.0 |
| 12* | 0.25 EPOXY-1 | 0.35 | 0.47 | 34.2 |
| 13* | 0.5 EPOXY-2 | 0.34 | 0.49 | 44.1 |
| 14* | 1.5 EPOXY-2 | 0.37 | 0.5 | 35.1 |
| 15* | 3 EPOXY-2 | 0.33 | 0.49 | 48.5 |
| 16 | 0.2 RPS | 0.35 | 0.48 | 37.1 |
| 17 | 1 RPS | 0.35 | 0.48 | 37.1 |
| 18 | 0.1 TEOB | 0.34 | 0.5 | 47.1 |
| 19 | 0.5 TEOB | 0.35 | 0.51 | 45.7 |

| | | | | |
|---|---|---|---|---|
| (* = comparative example). | | | | |

As seen by these data, inorganic salts such as zinc oxide and sodium phosphate lead to substantial degradation of the polycarbonate as noted by the large percent change in the PCI value. Acid scavengers containing epoxy, oxazoline, or ortho ester moieties improve the polycarbonate resistance to hydrolysis under conditions of high temperature and high humidity as indicated by the reduced change in the PCI values after aging.

These data illustrate the improved properties obtained with an effective amount of an acid scavenger in the present blends. The actual amount required will, depend on several variables such as the molecular weight of the acid scavenger, the number of reactive moieties on the acid scavenger, the solubility of the acid scavenger in the polycarbonate phase, phosphate utilized, and the aging environment. Those skilled in the art can readily determine an effective amount without undue experimentation. It should be clear, however, that the present invention includes an amount of at least one acid scavenger containing at least one moiety selected from oxazoline and ortho ester, effective to maintain the increase in the polycarbonate index (PCI) to less than about 50%, preferably less than about 30%, after subjecting the resin composition to aging at 63°C at 100% relative humidity for six weeks.

## Claims

1. A flame resistant thermoplastic resin composition comprising:
(A) a polycarbonate resin;
(B) a monovinylidene aromatic compound;
(C) at least one phosphate flame retardant compound; and
(D)an amount of an acid scavenger containing at least one moiety selected from the group consisting of oxazoline, and ortho ester effective to maintain the increase in the polycarbonate index to less than 50% after subjecting the resin composition to aging at 63°C at 100% relative humidity for six weeks.

2. The composition of Claim 1, wherein the amount of an acid scavenger is effective to maintain the increase in the polycarbonate index to less than 30%.

3. The composition of Claim 1, wherein the acid scavenger contains at least two moieties selected from the group consisting of oxazoline, and ortho ester.

4. The composition of Claim 1, wherein the acid scavenger is soluble in the polycarbonate.

5. The composition of Claim 1, wherein the acid scavenger is capable of neutralizing or reacting with a hydrolysis product of the phosphate.

6. The composition of Claim 1, wherein said phosphate flame retardant has the formula: 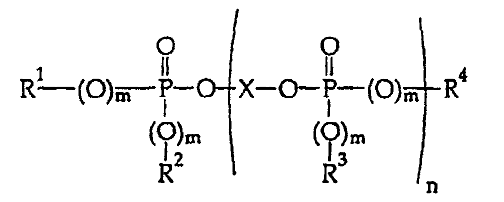 wherein R¹, R², R³, and R⁴ are independently selected from the group consisting of aryl groups and alkaryl groups; X is an arylene group; each m is independently 0 or 1, and the average value of n is from 0 to about 35.

7. The composition of Claim 6, wherein the average value of n in said phosphate flame retardant is from 0 to about 5.

8. The composition of Claim 1, wherein said monovinylidene aromatic compound is an acrylonitrile-butadiene-styrene resin.

9. The composition of Claim 1, further comprising a tetrafluoroethylene polymer.

## Patentansprüche

1. Flammbeständige thermoplastische Harzzusammensetzung, umfassend
a) ein Polycarbonatharz,
b) eine Monovinyliden-aromatische Verbindung,
c) mindestens eine flammhemmende Phosphatverbindung, und
d) eine Menge eines mindestens eine Komponente aus der Gruppe der Oxazoline und der Orthoester enthaltenden Säurefängers, die den Anstieg im Polycarbonatindex bei weniger als 50 % hält nachdem die Harzzusammensetzung bei 63 °C und 100 % relativer Luftfeuchtigkeit sechs Wochen der Alterung ausgesetzt wurde.

2. Zusammensetzung nach Anspruch 1, worin die Menge des Säurefängers den Anstieg im Polycarbonatindex bei weniger als 30 % hält.

3. Zusammensetzung nach Anspruch 1, worin der Säurefänger mindestens zwei Komponenten enthält, die aus der Gruppe der Oxazoline und der Orthoester ausgewählt sind.

4. Zusammensetzung nach Anspruch 1, worin der Säurefänger in dem Polycarbonat löslich ist.

5. Zusammensetzung nach Anspruch 1, worin der Säurefänger ein Hydrolyseprodukt des Phosphats neutralisieren oder damit reagieren kann.

6. Zusammensetzung nach Anspruch 1, worin der Phosphatflammhemmer die Formel 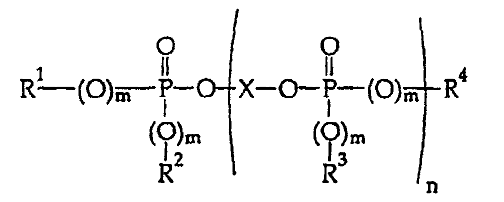 besitzt, worin R¹, R², R³ und R⁴ unabhängig voneinander ausgewählt sind aus der Gruppe der Arylreste und Alkarylreste, X eine Arylengruppe ist, jedes m unabhängig voneinander 0 oder 1 ist und der durchschnittliche Wert von n zwischen 0 und etwa 35 liegt.

7. Zusammensetzung nach Anspruch 6, worin der durchschnittliche Wert von n in dem Phosphatflammhemmer zwischen 0 und etwa 5 liegt.

8. Zusammensetzung nach Anspruch 1, worin die Monovinyliden-aromatische Verbindung ein Acrylnitril-Butadien-Styrol-Harz ist.

9. Zusammensetzung nach Anspruch 1, die weiterhin ein Tetrafluorethylenpolymer umfasst.

## Revendications

1. Composition à base de résine thermoplastique, résistant à l'inflammation, qui comprend :
(A) une résine de polycarbonate,
(B) un composé aromatique monovinylidène,
(C) au moins un composé ignifugeant du type phosphate, et
(D) une quantité d'un agent fixant les acides, contenant au moins un fragment choisi parmi les fragments oxazoline et ortho-ester, qui permet de maintenir l'augmentation de l'indice du polycarbonate à une valeur inférieure à 50% après que la composition à base de résine a été soumise à un vieillissement à 63°C, à une humidité relative de 100%, pendant six semaines.

2. Composition selon la revendication 1, pour laquelle la quantité d'agent fixant les acides permet de maintenir l'augmentation de l'indice du polycarbonate à une valeur inférieure à 30%.

3. Composition selon la revendication 1, dont l'agent fixant les acides contient au moins deux fragments choisis parmi les fragments oxazoline et ortho-ester.

4. Composition selon la revendication 1, dont l'agent fixant les acides est soluble dans le polycarbonate.

5. Composition selon la revendication 1, dont l'agent fixant les acides est capable de neutraliser un produit d'hydrolyse du phosphate ou de réagir avec lui.

6. Composition selon la revendication 1, dont ledit ignifugeant du type phosphate répond à la formule : 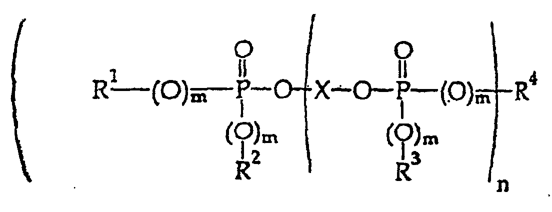 dans laquelle R¹, R², R³ et R⁴ représentent chacun, indépendamment, un groupe aryle ou un groupe alkylaryle, X représente un groupe arylène, chaque m est indépendamment 0 ou 1, et la valeur moyenne de n est de 0 à environ 35.

7. Composition selon la revendication 6, pour laquelle la valeur moyenne de n dudit ignifugeant du type phosphate est de 0 à environ 5.

8. Composition selon la revendication 1, dont ledit composé aromatique monovinylidène est une résine d'acrylonitrile, de butadiène et de styrène.

9. Composition selon la revendication 1, qui renferme en outre un polymère de tétrafluoroéthylène.
